# EUROPEAN PATENT SPECIFICATION

(11) **EP 2 612 078 B1**
(45) Date of publication and mention of the grant of the patent: **11.04.2018**
(21) Application number: 11770151.6
(22) Date of filing: 29.08.2011
(51) Int. Cl.: F24H 4/04, F28D 21/00, F24D 11/02, E03F 3/04

(54) **METHOD AND CIRCUIT ARRANGEMENT FOR RECOVERING HEAT FROM WASTEWATERS**
VERFAHREN UND SCHALTUNGSANORDNUNG ZUR ABWÄRMERÜCKGEWINNUNG AUS ABWÄSSERN
PROCÉDÉ ET AMÉNAGEMENT DE CIRCUIT POUR LA RÉCUPÉRATION DE CHALEUR À PARTIR D'EAUX USÉES

(30) Priority: 01.09.2010 HU P1000461
(43) Date of publication of application: 10.07.2013
(73) Proprietor: Thermowatt Energetikai És Építöipari Kft., 1023 Budapest (HU)
(72) Inventor: KISS, Pál, H-1024 Budapest (HU); KOCSIS, János, H-1025 Budapest (HU); KÖRÖSSY, Daniella, H-1142 Budapest (HU)
(74) Representative: Kereszty, Marcell
(86) International application number: PCT/HU2011/000089
(87) International publication number: WO 2012/028892

(56) References cited:
- EP-A2- 1 970 660
- CN-Y- 2 522 803
- CN-Y- 201 221 877
- FR-A1- 2 935 782
- HU-B- 205 988

## Description

The invention relates to a method and circuit arrangement for recovering heat from wastewaters, comprising a wastewater circuit, a primary circuit, and a secondary circuit arranged to be in heat transfer connection.

As natural gas and oil reserves are exploited more and more intensively each year and the negative effects of burning fossil fuel on long-term climate change have become evident, energy efficiency and the increasing use of renewable energy are important concerns. Renewable energy sources are those readily available and naturally replenished energy sources from which energy can be extracted for a prolonged time. Using renewable energy sources is in line with the concept of sustainable development and does not harm the environment. Recovering heat from wastewaters is an economically viable option for exploiting renewable energy that does not decrease the quality of life. The temperature of communal and household wastewater flowing in the underground sewerage system is 10-20 °C, while the temperature of industrial wastewaters may even be higher than that. The temperature of wastewater (sewage) in the common sewers (or collecting sewers) of sewerage systems does not fall under 10 °C even in winter. Wastewaters may therefore be expediently applied for delivering heat energy to buildings, especially utilising heat pumps.

A number of solutions have been disclosed for recovering heat from wastewaters. Heat may be extracted from the effluent, cleaned wastewater treated in sewage treatment plants. However, much of the heat content of raw sewage is lost during treatment, and therefore in this method the attainable efficiency of heat recovery is low.

According to a different solution heat may be extracted from sewage that is being transported towards the treatment plant in the common sewer. According to a known solution sewage is fed in a heat exchanger that is connected to a heat utiliser through a heat pump. The disadvantage of this method is that raw sewage is passed through a heat exchanger having narrow tubular passages that get blocked easily due to the coarse material content of raw sewage. By applying chopper pumps this problem may be solved only partially, and with significantly increased costs. A further disadvantage of this solution is that the heat exchanger and the heat pump (and in specific cases also the heat utiliser) are installed in the same space, so in case of improper sealing or malfunction odour pollution is inevitable.

Hungarian patent HU 205 988 relates to a circuit arrangement for recovering heat from raw sewage. The circuit arrangement comprises a heat exchanger arranged to be in heat transfer connection with the sewage, and a heat utiliser that is connected to the heat exchanger through a heat pump. The heat exchanger is made from wave line-shaped pipe arranged in the common sewer in a plane parallel with the direction of flow. One of the disadvantages of this invention is that the heat exchanger is submerged in raw sewage, and thus small gaps between pipes may get clogged, deteriorating heat transfer. Coarse material carried by the wastewater may get stuck at the heat exchanger, which leads to sewer obstruction. Also, cleaning the heat exchanger tubes that extend in the sewage is a troublesome undertaking. Another drawback of the invention described in the document HU 205 988 is that - similarly to the solution mentioned above - the heat exchanger and the common sewer are in the same space.

EP 1 970 660 A2 discloses a screening and back-flushing arrangement for a wastewater heat recovery system. A screening device is positioned within a shaft adjacent to the common sewer. After coarse material removal, the sewage liquid is pumped to a heat exchanger for recovering heat, and returned to sewer back-flushing the previously removed coarse material. The raw sewage water connection and the utilised sewage return line connection are positioned on the side wall of the common sewer. The objective of the present invention is to recover heat from wastewater (sewage) constantly available in sewerage systems in a simple and cost-effective manner, while protecting the environment from odour and other pollution.

The objective of the invention is fulfilled by the features described in Claims 1, 3. Improvements and advantageous embodiments of the invention are described in the dependent claims.

Heat is recovered from wastewater in a wastewater circuit, primary circuit, and secondary circuit arranged to be in heat transfer connection, while neither a heat exchanger nor any other heat utiliser component is disposed in the common sewer. In the wastewater circuit, at least a portion of raw sewage transported in a common sewer is fed through a raw sewage line to a screening case disposed in a sewage intake shaft. Screened sewage flowing from the screening case to the sewage intake shaft is fed to a first side of a heat exchanger, and subsequently, after heat is recovered from it, the utilised sewage is reintroduced to the common sewer through a utilised sewage return line.

Most of the solids content of the sewage is captured in the screening case. Screening provides that only screened wastewater that is largely free from coarse material is fed to the sewage intake shaft and then to the heat exchangers. Thereby the heat exchanger is protected from clogging, allowing the application of simpler heat exchangers, for instance of the shell-and-tube type. The heat exchanger may be of other type, for instance in a preferred embodiment of the invention a plate heat exchanger may be applied.

A coarse material remover, disposed in the sewage intake shaft, is applied for removing coarse material captured in the screening case. From the aspect of environmental protection an important characteristics of the invention is that it is not necessary to remove the captured coarse material (to be treated as hazardous waste) from the system, and store and transport them separately. This is achieved because the coarse material removed from sewage are fed back to the utilised sewage return line leading to the common sewer. A further important characteristics of the method is that after heat is recovered from it, the utilised sewage is fed back through a utilised sewage return line such that it washes back the previously removed coarse material to the common sewer.

Utilised sewage is reintroduced to the common sewer at a temperature agreed on with the company running the sewerage system. The temperature of reintroduced sewage may be adjusted by setting the operating mode of the heat pump. In a preferred way of carrying out the method according to the invention screened sewage is reintroduced to the sewerage system at a temperature of at least 10 °C in the winter operating mode. The term "winter operating mode" is taken to mean here the connection state where the method is applied for heating. In the summer operating mode, that is, when the method is applied for cooling, the temperature of screened sewage cannot fall under 10 °C.

In the primary circuit the working medium circulated in the other side of the heat exchanger of the wastewater circuit is fed to a heat pump. Heat pumps are known per se from prior art. It is also known from prior art that the working medium can be fed to the evaporator or the compressor of the heat pump, depending on whether a cooling or heating operating mode is chosen. This step is therefore not described in detail in the present specification.

In a further step of the method the heat-carrying working medium circulated in the heat pump is fed to at least one storage tank disposed in the secondary circuit, and subsequently from the storage tank the heat-carrying medium is fed to at least one heat utiliser. The heat utiliser may for instance be a central heating system known per se, where radiators disposed around a building are applied for heating or cooling the rooms.

A circuit arrangement for recovering heat from wastewaters is defined in claim 3 and comprises
- a wastewater circuit having a sewage intake shaft with a raw sewage line connectable to the common sewer in a circumferentially lowest position, and at least one heat exchanger connected to the sewage intake shaft,
- a primary circuit having at least one heat pump, and
- a secondary circuit comprising at least one storage tank and at least one heat utiliser, where the wastewater circuit, the primary circuit, and the secondary circuit are arranged to be in heat-transfer connection,
- where the sewage is fed to one side of the wastewater circuit heat exchanger and the working medium of the heat pump of the primary circuit is fed to the other side of the same heat exchanger, and
- the heat-carrying working medium of the heat pump is fed to the storage tank of the secondary circuit, with the storage tank being connected to a heat utiliser.

Furthermore
- the wastewater circuit is spatially separated from the primary circuit and the secondary circuit, and
- a screening case is arranged in the sewage intake shaft of the wastewater circuit, where a raw sewage line connecting the common sewer with the sewage intake shaft is terminated in the screening case, and where one end of a coarse material remover extends into the screening case, with the other end of the coarse material remover being connected to a utilised sewage return line that is terminated in the common sewer and
- screened sewage is fed from the sewage intake shaft to one side of the heat exchanger, with utilised sewage leaving the heat exchanger being fed in the utilised sewage return line such that it washes the coarse material removed by the coarse material remover back to the utilised sewage return line.

According to a preferred embodiment of the invention the screening case is implemented as a basket having perforated walls and bottom, with one end of the coarse material remover implemented as a vertical-axis screw extending in the basket. The number and type of heat exchangers may be different across different embodiments of the invention. In a preferred embodiment of the circuit arrangement three shell-and-tube heat exchangers are included.

According to a further preferred embodiment two serially connected heat pumps are arranged in the primary circuit.

In a still further preferred embodiment two storage tanks are arranged in the secondary circuit such that they are connected through divider-collector means to a heating and cooling circuit. The storage tanks are arranged in parallel connection.

Auxiliary components applied in the circuit arrangement, such as pumps, valves, dividers, and collectors are known per se and are therefore not described in detail. It is important to emphasise that the same components of the system may be applied for heating in winter and for cooling in summer through direction switching.

The invention is explained in more detail referring to the accompanying drawings, where
Fig. 1 is a schematic view of the circuit arrangement according to the invention,
Fig. 2 shows a schematic view of the sewage intake shaft in relation to the common sewer,
Fig. 3 is a magnified detail view showing the screening case and the end of the coarse material remover, and
Fig. 4 is a schematic top plan view of the wastewater circuit.

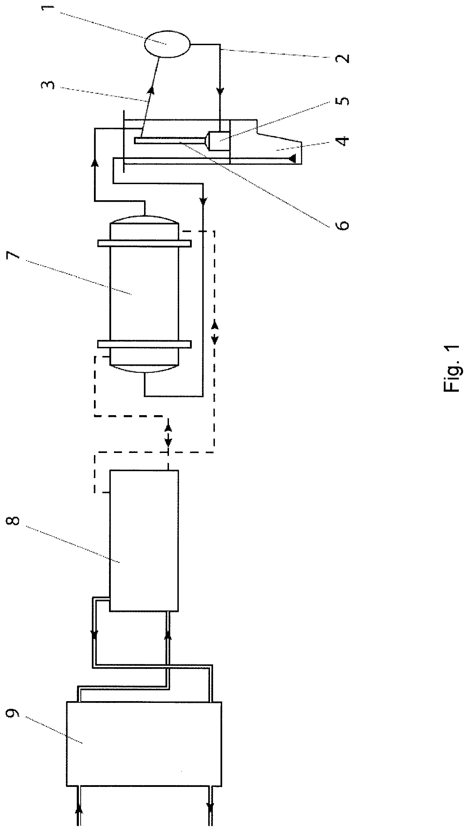

Fig. 1 shows the schematic view of the circuit arrangement according to the invention. The circuit arrangement is applied for recovering heat from wastewater flowing in a common sewer 1 of a sewerage system. The circuit arrangement consists of a wastewater circuit, a primary circuit, and a secondary circuit that are spatially separated but are arranged to be in heat-transfer connection. Spatial separation of the wastewater circuit is advantageous because components that are in contact with sewage can be installed in a separate building at the screening station, while the components of the primary and secondary circuit as well as auxiliary components that are in contact only with clean substances are installed in the main building. Installing the components of the wastewater circuit in a separate building such that they are spatially separated from the primary circuit and the secondary circuit bears significance from the aspects of environmental protection and comfort, because thereby the heat utiliser, for instance the central heating system of residential, commercial or communal buildings, is filled only with clean water or heat transfer medium, and thus no odour pollution or other pollution occurs. Separating the circuits carrying clean substances (the primary and secondary circuits) from the wastewater circuit renders maintenance and servicing operations easier.

Auxiliary components, such as dividers, collectors, piping, shutters, pumps, etc. are familiar to a person skilled in the art, and thus the inclusion of these components in the design of the circuit arrangement is an obvious engineering task. These components are therefore not shown in the drawings.

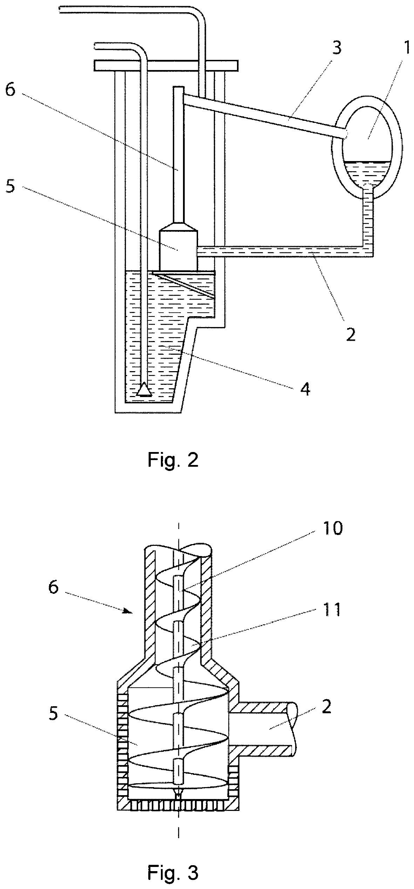

As it is shown in Fig. 2 in more detail, in the wastewater circuit the circumferentially lowest position of a common sewer 1 is connected to a raw sewage line 2 and, through a coarse material remover 6, to a utilised sewage return line 3. The raw sewage line 2 is terminated in a screening case 5 disposed in the sewage intake shaft 4. The screening case 5 is implemented as a basket having perforated walls and bottom, adapted for capturing a major portion of the solids content of the sewage. The screened sewage is fed from the screening case 5 to the sewage intake shaft 4. A coarse material remover 6 is connected to the screening case 5, with a utilised sewage return line 3 being connected to the end of the coarse material remover 6 distal from the screening case 5.

As it is shown in Fig. 2 and Fig. 3 in more detail, the coarse material remover 6 has a cylindrical casing attached to the screening case 5, with a screw shaft 10 being rotatably arranged in the casing. The screw shaft 10 has screw blades 11 that are arranged to contact the inside wall of the casing of the coarse material remover 6 and also the inside wall of the screening case 5. In a preferred embodiment of the invention the edges of the screw blades 11 that are in contact with the wall of the screening case 5 are equipped with a flexible ribbon or broom that allows the cleaning of the wall of the screening case 5. The screw blades 11 of the screw shaft 10 remove a major portion the solids content of raw sewage, transporting the removed coarse material upwards in the cylindrical casing. The solids are then fed in an outlet opening leading to the utilised sewage return line 3. The application of a closed wastewater circuit allows heat recovery from sewage in an environmentally friendly manner since the sewage and the coarse material carried by it do not leave the closed wastewater circuit and are fed back to the sewer in their entirety, and therefore it is not necessary to separately store, transport, or treat environmentally hazardous substances. Because the screw blades 11 of the coarse material remover 6 remove the contaminants built up on the wall of the casing, the screening case 5 and the coarse material remover 6 are cleaned automatically during normal operation, and thereby no manual cleaning is required.

The mechanical arrangement of the screening case and/or the coarse material remover may be different from the one described in relation to the preferred embodiment. The screening case may have oval or polygonal cross-sectional shape, and may be made from metal or plastic mesh. In specific cases the bottom of the screening case may be made water-impermeable The coarse material remover may be implemented as a threaded rod or as a shaft comprising helically arranged pegs. The screening case and the casing of the coarse material remover may be implemented as an integral component, or as interconnected separate components.

From the sewage intake shaft 4 the screened sewage is fed in the tubes of the shell-and-tube heat exchanger 7 where its heat content is transferred to a working medium that is applied in summer for absorbing heat and in winter for delivering heat, and is circulated outside the tubes of the heat exchanger. After its heat content has been recovered in the heat exchanger 7, utilised sewage is fed back in the utilised sewage return line 3 connected to the coarse material remover 6 disposed in the sewage intake shaft 4. Backward-flowing sewage washes back to the common sewer 1 from the utilised sewage return line 3 the coarse material supplied by the coarse material remover 6. In Fig. 1, sewage lines and the direction of flow of sewage are shown by a continuous line with arrows.

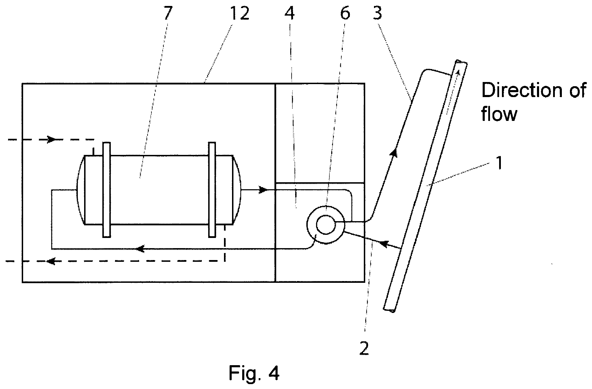

Fig. 4 shows the schematic top plan view of the wastewater circuit. In the embodiment shown in the drawing the sewage intake shaft 4 and the heat exchanger 7 of the wastewater circuit are both installed in the same building as a screening station 12. Alternatively, the sewage intake shaft and the heat exchangers may be installed in separate buildings and may be connected with pipes. For the sake of clarity only one heat exchanger 7 is shown in the drawing. Embodiments in which more than one heat exchanger 7 is built in the screening station 12 also fall in the scope of protection of the invention. In this case the heat exchangers 7 are preferably arranged in parallel connection. The parallel connection of the heat exchangers allow maintenance and servicing during operation. Similarly to Fig. 1, the direction of flow of sewage is shown by a continuous line with arrows. The outlet openings connecting the raw sewage line 2 and the utilised sewage return line 3 to the common sewer 1 are located at a distance from each other. A larger distance should be left between the two pipe outlets so as to prevent the reintroduced utilised sewage from raising or lowering the temperature of the raw sewage, which would decrease the efficiency of heat recovery. The utilised sewage is reintroduced to the common sewer 1 at such a distance that the warmed-up or cooled-down utilised sewage does not substantially alter the temperature of the raw sewage.

Returning now to Fig. 1, the working medium fed to the other side of the heat exchanger 7 is fed in a heat pump 8. The direction of flow of the working medium is shown by a dashed line with arrows. The embodiment illustrated in the drawing contains a single heat pump 8, but embodiments comprising two or more heat pumps also fall in the scope of protection of the invention. The heat pumps may preferably be arranged in series connection. In case multiple serially connected evaporators are applied, only a portion of the removed heat is used for evaporating the intermediate working medium at a temperature under the leaving temperature of the fluid, namely only in the last evaporator, while in the preceding evaporators evaporation occurs at higher temperatures, and thus only a fraction of the intermediate working medium has to be compressed by the compressor to the final pressure from the lowest pressure present, and the remainder can be compressed from gradually increasing pressures. Thereby the efficiency of the cycle performed by the working medium that is evaporated at higher temperature will be better, which improves the overall efficiency of the whole unit.

In the circuit arrangement according to the invention the working medium leaving the other side of the heat exchanger 7 may be fed to the evaporator or the compressor of the heat pump 8, depending on whether a cooling or heating operating mode is desired. The two possible directions of flow of the working medium in the primary circuit are illustrated in the drawing by the arrows on the dashed line representing the primary circuit.

A storage tank 9 is connected to the secondary circuit of the circuit arrangement of the present invention. In the preferred embodiment a single storage tank 9 is included. The number of the storage tanks may be higher if so required. In that case the storage tanks are preferably arranged in parallel connection. In a particularly advantageous embodiment the circuit arrangement comprises two storage tanks connected in parallel through divider and collector means. The heat carrying medium of the secondary circuit is illustrated in Fig. 1 by a double line with arrows. The heat carrying medium is fed from the storage tank 9 to a heat utiliser that is known per se and is not shown in the drawing. As heat utiliser the central heating system of buildings may be applied, which may be operated in a computer-controlled, automatic manner in heating or cooling operating modes depending on the operating mode of the heat pump 8.

The main advantage of the method and circuit arrangement according to the invention is that it can be implemented quickly and easily. Individual components of the arrangement are known per se, and are commercially available. Both the piping applied for connecting the components and the appliances built in the piping are known per se, and are commercially available. For automatically opening, shutting, and sectioning of the piping system, and for changing the operating mode, remote controlled motor valves may be applied. A further advantage of the invention is that its application is not dependent on sewer size. Depending on the number of heat exchangers, heat pumps, and storage tanks applied, the invention is flexibly scalable for a wide range of heat recovery applications.

A still further advantage of the method is that it allows for serving multiple utilisers in a single system.

### List of reference numerals

- 1: common sewer
- 2: raw sewage line
- 3: utilised sewage return line
- 4: sewage intake shaft
- 5: screening case
- 6: coarse material remover
- 7: heat exchanger
- 8: heat pump
- 9: storage tank
- 10: screw shaft
- 11: screw blade
- 12: screening station

## Claims

1. A method for recovering heat from wastewaters in a wastewater circuit, primary circuit and secondary circuit arranged in a heat transfer connection, comprising the steps of
- in the wastewater circuit, feeding at least a portion of raw sewage transported in a common sewer (1) to a screening case (5) disposed in a sewage intake shaft (4), with a portion of the solids content of the sewage being captured and removed in the screening case (5), feeding the screened sewage to a first side of a heat exchanger (7), and subsequently, after heat is recovered from it, feeding the utilised sewage to a utilised sewage return line (3) for washing back the previously removed coarse material to the common sewer (1),
- in the primary circuit, feeding a working medium circulated in the other side of the heat exchanger (7) to an evaporator or a compressor of a heat pump (8), depending on whether a cooling or heating operating mode is chosen, and
- feeding the heat-carrying working medium circulated in the heat pump (8) to a storage tank (9) of the secondary circuit, and subsequently from the storage tank (9) to at least one heat utiliser, wherein
raw sewage is fed from the common sewer (1) to the screening case (5) through a raw sewage line (2), the connection of the raw sewage line (2) to the common sewer (1) being formed on the common sewer (1) in a circumferentially lowest position.

2. The method according to Claim 1, **characterised in that** the utilised sewage is reintroduced to the common sewer (1) downstream of the raw sewage intake at a distance.

3. A circuit arrangement for recovering heat from wastewaters, comprising
- a wastewater circuit having a sewage intake shaft (4) connectable to a common sewer (1) through a raw sewage line (2) and an utilised sewage return line (3), a screening case (5) arranged in the sewage intake shaft (4), the screening case comprising a coarse material remover (6), the wastewater circuit connecting one side of at least one heat exchanger (7) to the sewage intake shaft (4),
- a primary circuit comprising at least one heat pump (8) and connecting to another side of the at least one heat exchanger (7),
- a secondary circuit comprising at least one storage tank (9) and at least one heat utiliser, wherein the wastewater circuit, the primary circuit, and the secondary circuit are arranged to be in a heat-transfer connection, wherein
- the wastewater circuit is spatially separated from the primary circuit and the secondary circuit, the connection of the raw sewage line (2) to the common sewer (1) being formed so to connect the common sewer (1) in a circumferentially lowest position,
- the raw sewage line (2) connecting the common sewer (1) with the sewage intake shaft (4) terminating in the screening case (5), wherein one end of the coarse material remover (6) extends into the screening case (5), with the other end of the coarse material remover (6) being connected to a utilised sewage return line (3) for connecting the sewage intake shaft (4) and the common sewer (1), and wherein
- screened sewage is fed from the sewage intake shaft (4) to one side of the at least one heat exchanger (7), the utilised sewage leaving the heat exchanger (7) is fed in the utilised sewage return line (3) for washing the coarse material removed by the coarse material remover (6) back to the utilised sewage return line (3),
a working medium of the heat pump (8) of the primary circuit is fed to the other side of the heat exchanger (7), and the heat-carrying working medium of the heat pump (8) is fed to the storage tank (9) of the secondary circuit.

4. The circuit arrangement according to Claim 3, **characterised in that** the screening case (5) is implemented as a basket having perforated walls and bottom, with one end of the coarse material remover (6) implemented as a vertical-axis screw extending in the basket.

5. The circuit arrangement according to Claim 3, **characterised in that** three heat exchangers (7) are arranged in parallel connection in the wastewater circuit.

6. The circuit arrangement according to Claim 5, **characterised in that** the heat exchangers (7) are shell-and-tube heat exchangers.

7. The circuit arrangement according to Claim 3, **characterised in that** two heat pumps (8) are arranged in series connection in the primary circuit.

8. The circuit arrangement according to Claim 3, **characterised in that** two storage tanks (9) are arranged in the secondary circuit such that they are connected through divider-collector means to a heating and cooling circuit functioning as heat utiliser.

## Patentansprüche

1. Verfahren zur Rückgewinnung von Wärme aus Abwässern in einem Abwasserkreislauf, Primärkreislauf und Sekundärkreislauf, die in einer Wärmeübertragungsverbindung angeordnet sind, umfassend die Schritte:
- im Abwasserkreislauf Einspeisung von mindestens einem Teil des in einem Gemeinschaftsabwasserkanal (1) transportierten Rohabwassers in ein Siebgehäuse (5), das in einem Abwassereinlaufschacht (4) angeordnet ist, wobei ein Teil der Feststoffe des Abwassers in dem Siebgehäuse (5) aufgefangen und entfernt wird, Zuführen des gesiebten Abwassers zu einer ersten Seite eines Wärmeübertragers (7) und anschließend, nachdem Wärme aus ihm zurückgewonnen wurde, Zuführen des verwendeten Abwassers zu einer Rückführleitung (3) für verwendetes Abwasser, um die zuvor entfernten Grobstoffe in den Gemeinschaftsabwasserkanal (1) zurück zu waschen,
- im Primärkreislauf Zuführen eines Arbeitsmediums, das auf der anderen Seite des Wärmeübertragers (7) zirkuliert, zu einem Verdampfer oder einem Kompressor einer Wärmepumpe (8), je nachdem, ob ein Kühl- oder Heizbetriebsmodus gewählt wird, und
- Zuführen des in der Wärmepumpe (8) zirkulierenden wärmeführenden Arbeitsmediums zu einem Speicherbehälter (9) des Sekundärkreislaufs und anschließend aus dem Speicherbehälter (9) zu wenigstens einem Wärmeverbraucher, wobei
Rohabwasser aus dem Gemeinschaftsabwasserkanal (1) durch eine Rohabwasserleitung (2) in das Siebgehäuse (5) geleitet wird, wobei die Verbindung der Rohabwasserleitung (2) mit dem Gemeinschaftsabwasserkanal (1) an einer niedrigsten Position des Umfangs des Gemeinschaftsabwasserkanals (1) hergestellt wird.

2. Verfahren nach Anspruch 1, **dadurch gekennzeichnet, dass** das verwendete Abwasser in einem Abstand stromabwärts von der Rohabwasserzuführung wieder in den Gemeinschaftsabwasserkanal (1) eingeführt wird.

3. Kreislaufanordnung zur Rückgewinnung von Wärme aus Abwässern, umfassend
- einen Abwasserkreislauf mit einem Abwassereinlaufschacht (4), der über eine Rohabwasserleitung (2) und eine Rückführleitung (3) für verwendetes Abwasser mit einem Gemeinschaftsabwasserkanal (1) verbindbar ist, wobei ein Siebgehäuse (5) im Abwassereinlaufschacht (4) angeordnet ist, wobei das Siebgehäuse einen Grobstoffentferner (6) umfasst, wobei der Abwasserkreislauf eine Seite von mindestens einem Wärmeübertrager (7) mit dem Abwassereinlaufschacht (4) verbindet,
- einen Primärkreislauf, der mindestens eine Wärmepumpe (8) umfasst und mit einer anderen Seite des mindestens einen Wärmeübertragers (7) verbunden ist,
- einen Sekundärkreislauf mit mindestens einem Speicherbehälter (9) und mindestens einem Wärmeverbraucher, wobei der Abwasserkreislauf, der Primärkreislauf und der Sekundärkreislauf in einer Wärmeübertragungsverbindung angeordnet sind,
wobei
- der Abwasserkreislauf räumlich vom Primärkreislauf und vom Sekundärkreislauf getrennt ist,
- die Verbindung der Rohabwasserleitung (2) mit dem Gemeinschaftsabwasserkanal (1) so ausgebildet ist, dass sie den Gemeinschaftsabwasserkanal (1) in einer niedrigsten Position des Umfangs verbindet,
- die den Gemeinschaftsabwasserkanal (1) mit dem Abwassereinlaufschacht (4) verbindende Rohabwasserleitung (2) in dem Siebgehäuse (5) endet, wobei ein Ende des Grobstoffentferners (6) in das Siebgehäuse (5) reicht, wobei das andere Ende des Grobstoffentferners (6) mit einer Rückführleitung (3) für verwendetes Abwasser zur Verbindung des Abwassereinlaufschachtes (4) und des Gemeinschaftsabwasserkanals (1) verbunden ist, und
wobei
- gesiebtes Abwasser von dem Abwassereinlaufschacht (4) einer Seite des mindestens einen Wärmeübertragers (7) zugeführt wird, das den Wärmeübertrager (7) verlassende verwendete Abwasser in die Rückführleitung (3) für verwendetes Abwasser geführt wird, um die von dem Grobstoffentferner (6) entfernten Grobstoffe in die Rückführleitung (3) für verwendetes Abwasser zurück zu waschen, ein Arbeitsmedium der Wärmepumpe (8) des Primärkreislaufes der anderen Seite des Wärmeübertrager (7) zugeführt wird, und das wärmeführende Arbeitsmedium der Wärmepumpe (8) dem Speicherbehälter (9) des Sekundärkreislaufes zugeführt wird.

4. Kreislaufanordnung nach Anspruch 3, **dadurch gekennzeichnet, dass** das Siebgehäuse (5) als ein Korb mit perforierten Wänden und Boden ausgeführt ist, wobei ein Ende des Grobstoffentferners (6) als eine sich in den Korb erstreckende Schraube mit vertikaler Achse ausgeführt ist.

5. Kreislaufanordnung nach Anspruch 3, **dadurch gekennzeichnet, dass** im Abwasserkreislauf drei Wärmeübertrager (7) parallelgeschaltet sind.

6. Kreislaufanordnung nach Anspruch 5, **dadurch gekennzeichnet, dass** die Wärmeübertrager (7) Rohrbündelwärmeübertrager sind.

7. Kreislaufanordnung nach Anspruch 3, **dadurch gekennzeichnet, dass** im Primärkreislauf zwei Wärmepumpen (8) in Reihenschaltung angeordnet sind.

8. Kreislaufanordnung nach Anspruch 3, **dadurch gekennzeichnet, dass** im Sekundärkreislauf zwei Speicherbehälter (9) derart angeordnet sind, dass sie über Teiler-Kollektor-Mittel mit einem als Wärmeverwerter arbeitenden Heiz- und Kühlkreislauf verbunden sind.

## Revendications

1. Procédé pour récupérer de la chaleur d'eaux usées dans un circuit d'eaux usées, un circuit primaire et un circuit secondaire agencés dans un raccordement de transfert de chaleur, comprenant les étapes de
- dans le circuit d'eaux usées, amener au moins une partie des eaux d'égout brutes transportées dans un égout commun (1) vers un caisson de filtrage (5) disposé dans un puits d'admission d'eaux d'égout (4), avec une partie de teneur en matières solides des eaux d'égout étant capturée et retirée dans le caisson de filtrage (5), amener les eaux d'égout filtrées vers un premier côté d'un échangeur de chaleur (7), et ensuite, après que la chaleur ait été récupérée de celles-ci, amener les eaux d'égout utilisées vers une ligne de retour d'eaux d'égout utilisées (3) pour relaver le matériau grossier précédemment retiré jusqu'à l'égout commun (1),
- dans le circuit primaire, amener un milieu de travail circulant dans l'autre côté de l'échangeur de chaleur (7) vers un évaporateur ou un compresseur d'une pompe à chaleur (8), selon si un mode opératoire de refroidissement ou de chauffage est choisi, et
- amener le milieu de travail caloporteur circulant dans la pompe à chaleur (8) vers un réservoir de stockage (9) du circuit secondaire, et ensuite depuis le réservoir de stockage (9) jusqu'à au moins un dispositif utilisateur de chaleur, dans lequel
les eaux d'égout brutes sont amenées de l'égout commun (1) au caisson de filtrage (5) par l'intermédiaire d'une ligne d'eaux d'égout brutes (2), le raccordement de la ligne d'eaux d'égout brutes (2) à l'égout commun (1) étant formé sur l'égout commun (1) dans une position circonférentielle la plus basse.

2. Procédé selon la revendication 1, **caractérisé en ce que** les eaux d'égout utilisées sont réintroduites dans l'égout commun (1) en aval de l'admission d'eaux d'égout brutes à une certaine distance.

3. Agencement de circuits pour récupérer de la chaleur à partir d'eaux usées, comprenant
- un circuit d'eaux usées ayant un puits d'admission d'eaux d'égout (4) raccordable à un égout commun (1) par une ligne d'eaux d'égout brutes (2) et une ligne de retour d'eaux d'égout utilisées (3), un caisson de filtrage (5) agencé dans le puits d'admission d'eaux d'égout (4), le caisson de filtrage comprenant un dispositif de retrait de matériau grossier (6), le circuit d'eaux usées reliant un côté d'au moins un échangeur de chaleur (7) au puits d'admission d'eaux d'égout (4),
- un circuit primaire comprenant au moins une pompe à chaleur (8) et raccordé à un autre côté du au moins un échangeur de chaleur (7),
- un circuit secondaire comprenant au moins un réservoir de stockage (9) et au moins un dispositif utilisateur de chaleur, dans lequel le circuit d'eaux usées, le circuit primaire et le circuit secondaire sont agencés pour être dans un raccordement de transfert de chaleur, dans lequel
- le circuit d'eaux usées est spatialement séparé du circuit primaire et du circuit secondaire,
- le raccordement de la ligne d'eaux d'égout brutes (2) à l'égout commun (1) étant formé de manière à raccorder l'égout commun (1) dans une position circonférentielle la plus basse, la ligne d'eaux d'égout brutes (2) reliant l'égout commun (1) au puits d'admission d'eaux d'égout (4) se terminant dans le caisson de filtrage (5), dans lequel une extrémité du dispositif de retrait de matériau grossier (6) s'étend dans le caisson de filtrage (5), avec l'autre extrémité du dispositif de retrait de matériau grossier (6) étant raccordée à une ligne de retour d'eaux d'égout utilisées (3) pour raccorder le puits d'admission d'eaux d'égout (4) et l'égout commun (1), et dans lequel
- les eaux d'égout filtrées sont amenées du puits d'admission d'eaux d'égout (4) vers un côté du au moins un échangeur de chaleur (7), les eaux d'égout utilisées quittant l'échangeur de chaleur (7) sont amenées dans la ligne de retour d'eaux d'égout utilisées (3) pour laver le matériau grossier retiré par le dispositif de retrait de matériau grossier (6) en arrière jusqu'à la ligne de retour d'eaux d'égout utilisées (3), un milieu de travail de la pompe à chaleur (8) du circuit primaire est amené vers l'autre côté de l'échangeur de chaleur (7), et un milieu de travail caloporteur de la pompe à chaleur (8) est amené vers le réservoir de stockage (9) du circuit secondaire.

4. Agencement de circuits selon la revendication 3, **caractérisé en ce que** le caisson de filtrage (5) est mis en oeuvre sous la forme d'un panier ayant parois et fond perforés, avec une extrémité du dispositif de retrait de matériau grossier (6) mis en oeuvre sous la forme d'une vis à axe vertical s'étendant dans le panier.

5. Agencement de circuits selon la revendication 3, **caractérisé en ce que** trois échangeurs de chaleur (7) sont agencés en raccordement en parallèle dans le circuit d'eaux usées.

6. Agencement de circuits selon la revendication 5, **caractérisé en ce que** les échangeurs de chaleur (7) sont des échangeurs de chaleur à coque et tube.

7. Agencement de circuits selon la revendication 3, **caractérisé en ce que** deux pompes à chaleur (8) sont agencées en raccordement en série dans le circuit primaire.

8. Agencement de circuits selon la revendication 3, **caractérisé en ce que** deux réservoirs de stockage (9) sont agencés dans le circuit secondaire de sorte qu'ils soient raccordés, par des moyens de séparation-collecte, à un circuit de chauffage et de refroidissement fonctionnant comme un dispositif utilisateur de chaleur.
